# EUROPÄISCHE PATENTANMELDUNG

(11) **EP 3 187 364 A1**
(43) Veröffentlichungstag der Anmeldung: **05.07.2017**
(21) Anmeldenummer: 16200468.3
(22) Anmeldetag: 24.11.2016
(51) Int. Cl.: B60L 15/20

(54) **ANTI-RUCKEL VERFAHREN**

(30) Priorität: 04.01.2016 DE 102016200006
(71) Anmelder: Magna Steyr Fahrzeugtechnik AG & Co KG, 8041 Graz (AT)
(72) Erfinder: PONGRATZ, Christian, 8093 St. Peter am Ottersbach (AT)
(74) Vertreter: Zangger, Bernd

(57) **Zusammenfassung**

Ein Verfahren zur Dämpfung von Ruckeln im Antriebsstrang eines Fahrzeugs mit einem Elektromotor (M) als Antriebsmotor, wobei ein Elektromotor-Sollmoment (MEm_neu) zur Ansteuerung des Elektromotors berechnet wird aus einem Elektromotor-Anforderungsmoment (MEm_soll), das der aktuellen Anforderung eines Drehmoments entspricht, und einem Korrekturmoment (s), wobei das Korrekturmoment (s) abhängig vom Elektromotor-Anforderungsmoment (MEm_soll) und von einem Korrekturfaktor (y) berechnet wird, wobei der Korrekturfakor (y) aus der Elektromotor-Drehzahl (n) bestimmt wird und ein Fahrzeug umfassend einen Antriebsstrang mit einem Elektromotor (M) als Antriebsmotor und eine Regelung, wobei die Regelung zur Ausführung eines solchen Verfahrens ausgebildet ist.

## Beschreibung

### Gebiet der Erfindung

Die vorliegende Erfindung betrifft ein Verfahren zur Dämpfung von Ruckeln im Antriebsstrang eines Fahrzeugs mit einem Elektromotor als Antriebsmotor. Die Erfindung betrifft auch ein Fahrzeug umfassend eine Regelung, wobei die Regelung zur Ausführung eines solchen Verfahrens zur Ruckel-Dämpfung ausgebildet ist.

### Stand der Technik

Bei allen Fahrzeugen gibt es ein bestimmtes Schwingungsverhalten des Antriebsstranges beim Anfahren oder auch während dem Fahren, wenn der Antriebsstrang sprunghaft angeregt wird. Bei Fahrzeugen mit einem Elektromotor als Antriebsmotor ist dieses Schwingen besonders beim Anfahren stark ausgeprägt. Grund hierfür ist, dass der komplette Antriebsstrang vereinfacht als ein Feder-Masse-System bzw. als eine Stabfeder verstanden werden kann, welche durch entsprechende Anregung zum Schwingen neigt. Bei einem Fahrzeug mit Elektromotor-Antrieb können insbesondere durch den mechanischen Aufbau des Elektromotors, des Drehzahlsensors, sowie durch Regelungs- und Stelleffekte im Umrichter Unförmigkeiten im Drehmoment des Antriebs entstehen. Diese Störungen sind drehzahlabhängig sowie auch lastabhängig - was dazu führt, dass sich ein sehr breites Störspektrum entwickeln kann. Dadurch können bei gewissen Drehzahlen Eigenfrequenzen vom nachgeschalteten mechanischen System, insbesondere dem Antriebsstrang, angeregt werden, es kann zu Resonanz bzw. Resonanzen kommen.

Dieses Aufschwingen des Antriebsstrangs ist vor allem im unteren Geschwindigkeitsbereich und beim Anfahren am Berg besonders ausgeprägt. Konventionelle Lösungsansätze dieses Antriebsstrangschwingen bzw. Ruckeln zu unterbinden, basieren auf der mechanischen Dämpfung, insbesondere der Schwingungsdämpfung durch die Entkopplung mittels Kupplung. Bei der Verwendung einer Verbrennungskraftmaschine, kann dieser Schwingung durch aktive Verstellung des Zündwinkels entgegengewirkt werden. Ein weiterer Lösungsansatz, welcher bei elektrischen Antrieben zum Einsatz kommen kann, basiert auf einer starken Begrenzung der Gradienten beim Momentenaufbau und einer damit verbundenen geringeren Anregung des Federsystems, aber auch schlechteren Dynamik des Fahrzeugs.

Aus der DE 10 2013 112 419 A1 ist beispielsweise ein Verfahren zur Anti-Ruck-Steuerung eines Hybridfahrzeuges ohne einem Drehmomentwandler bekannt, aufweisend: Bestimmen, ob ein Gangschaltbefehl von einer Getriebesteuereinrichtung des Hybridfahrzeuges ausgegeben ist; Bestätigen eines in wenigstens drei Phasen geteilten Gangschaltbereiches entsprechend dem Gangschaltbefehl, wenn bestimmt wird, dass der Gangschaltbefehl ausgegeben ist; Bestimmen, ob der entsprechende geteilte Gangschaltbereich ein Anti-Ruck-Zulassungs-Gangschaltbereich ist; und Phasenumkehrsteuern eines Antriebsmotors des Hybridfahrzeuges um einen vorbestimmten Wert, um eine Vibration und einen Stoß, die in dem entsprechenden Gangschaltbereich erzeugt werden, zu reduzieren oder zu dämpfen, wenn bestimmt wird, dass der entsprechende Gangschaltbereich der Anti-Ruck-Zulassungs-Gangschaltbereich ist.

Aus der DE 10 2012 224 294 A1 ist ein Verfahren zur Antiruckelsteuerung eines Fahrzeugs bekannt, das die Leistung eines Motors verwendet, wobei das Verfahren Folgendes aufweist: Ausgeben einer Ist-Drehzahl des Motors durch eine Steuerung; Ausgeben einer Modelldrehzahl des Motors durch die Steuerung; Ausgeben einer Vibrationskomponente basierend auf einer Abweichung zwischen der ausgegebenen Modelldrehzahl und der Ist-Drehzahl des Motors durch die Steuerung; Hochpass-Filtern der Vibrationskomponente durch die Steuerung, um eine Fehlerkomponente in der Vibrationskomponente zu entfernen; Verzögern einer Phase der gefilterten Vibrationskomponente für eine voreingestellte Zeit durch die Steuerung, um den während des Hochpass-Filterns auftretenden Phasenfehler zu kompensieren; und Anlegen einer voreingestellten Verstärkung an die gefilterte Vibrationskomponente durch die Steuerung, bei der die Phase für die voreingestellte Zeit verzögert wird, um ein Antiruckel-Kompensationsdrehmoment zu erzeugen.

Die US 2011 112 709 A1 offenbart eine Anti-Ruckel-Steuerung für ein Hybrid-Fahrzeug, die die Berechnung einer Modell-Geschwindigkeit des Motors umfasst, in einem Zustand in dem eine Vibration des Antriebsstranges nicht vorliegt, und die Berechnung einer Differenz zwischen der Modell-Geschwindigkeit und einer aktuellen Geschwindigkeit.

Durch die erfindungsgemäße Lösung zur Unterdrückung der mechanischen Schwingung des Antriebstranges soll das Aufschwingen des Antriebsstranges reduziert bzw. verhindert werden, ohne in den mechanischen Aufbau des Antriebsstranges eingreifen zu müssen. Dabei soll auch die Beschleunigung des Fahrzeugs nicht merklich verschlechtert werden, sowie das subjektive Fahrempfinden, insbesondere das Ansprechverhalten auf das Fahrpedal, für den Fahrer möglichst wenig negativ beeinflusst werden.

### Zusammenfassung der Erfindung

Es ist eine Aufgabe der Erfindung, ein eventuell auftretendes Schwingen bzw. als störend empfundenes Ruckeln insbesondere beim Anfahren eines Fahrzeuges mit Elektromotor elektronisch zu dämpfen und dabei den Fahrkomfort des Fahrzeugs und insbesondere das Ansprechverhalten des Fahrzeugs auf ein Fahrpedal nicht stark zu beeinträchtigen. Eine weitere Aufgabe ist es ein Fahrzeug anzugeben, dass eine derartige Ruckel-Dämpfung aufweist.

Die Lösung der Aufgabe erfolgt durch ein Verfahren zur Dämpfung von Ruckeln im Antriebsstrang eines Fahrzeugs mit einem Elektromotor als Antriebsmotor, wobei ein Elektromotor-Sollmoment zur Ansteuerung des Elektromotors berechnet wird aus einem Elektromotor-Anforderungsmoment, das der aktuellen Anforderung eines Drehmoments entspricht, und einem Korrekturmoment, wobei das Korrekturmoment abhängig vom Elektromotor-Anforderungsmoment und von einem Korrekturfaktor bestimmt wird, wobei der Korrekturfaktor aus der Elektromotor-Drehzahl gebildet wird.

Erfindungsgemäß wird ein neuer Sollwert für das Drehmoment des Antriebs-Elektromotors, der Elektromotor-Sollmoment, berechnet, der an den Elektromotor bzw. eine Momentenregelung des Elektromotors weitergereicht wird, ausgehend von einem vorausgehenden Sollwert des Drehmoments, dem Elektromotor-Anforderungsmoment, das üblicherweise durch Betätigen eines Fahrpedals durch den Fahrer und/oder die Umgebungssituation des Fahrzeugs vorgegeben wird - zum Beispiel beim Anfahren oder Bergauffahrt des Fahrzeuges. Dabei weist das Elektromotor-Anforderungsmoment üblicherweise noch keine Ruckel-Dämpfung auf, das Elektromotor-Sollmoment weist hingegen die ruckeldämpfende Korrektur auf.

Das Elektromotor-Sollmoment wird erfindungsgemäß aus zumindest zwei Komponenten berechnet, nämlich einerseits aus dem Elektromotor-Anforderungsmoment und andererseits aus einem Korrekturmoment, das auch selbst abhängig vom Elektromotor-Anforderungsmoment ist. Zusätzlich ist das Korrekturmoment abhängig von einem Korrekturfaktor, der aus der aktuellen Elektromotor-Drehzahl bestimmt wird.

Durch eine derartige Korrektur des Elektromotor-Anforderungsmoments ist es möglich insbesondere die beim Anfahren des Fahrzeugs entstehenden Schwingungen im Antriebsstrang auszuregeln.

Ein erfindungsgemäßes Fahrzeug umfasst einen Antriebsstrang mit einem Elektromotor als Antriebsmotor und eine Regelung, wobei die Regelung dazu ausgebildet ist, das erfindungsgemäße Verfahren auszuführen.

In einem erfindungsgemäßen Verfahren wird bevorzugt das Elektromotor-Sollmoment, zumindest in einem bestimmten Bereich der Fahrzeuggeschwindigkeit, als Summe des Elektromotor-Anforderungsmoments und des Korrekturmoments gebildet.

Das Korrekturmoment wird bevorzugt als Produkt eines aus dem Elektromotor-Anforderungsmoment gebildeten Anforderungs-Korrektur-Moments und dem Korrekturfaktor gebildet.

Dabei kann das Anforderungs-Korrektur-Moment mittels eines Kennfeldes, insbesondere mittels einer Wertetabelle, aus dem Elektromotor-Anforderungsmoment berechnet werden.

Der Korrekturfaktor kann positiv sein und kann negativ sein, kann aber auch Null sein. Bevorzugt kann der Korrekturfaktor nur drei diskrete Werte aufweisen, insbesondere 0, -1 und + 1.

Der Korrekturfaktor wird vorzugsweise aus einem Drehzahl-Störsignal mittels eines Dreipunkt-Reglers bestimmt. Das Drehzahl-Störsignal selbst wird aus der Elektromotor-Drehzahl bestimmt.

Bevorzugt wird das Drehzahl-Störsignal mittels Signalfilterung, insbesondere mittels eines Bandpassfilters, aus der Elektromotor-Drehzahl gebildet.

Vorzugsweise wird in einem erfindungsgemäßen Verfahren auch die aktuelle Fahrzeuggeschwindigkeit mit einer definierten Grenzgeschwindigkeit verglichen und das Elektromotor-Sollmoment nur falls die aktuelle Fahrzeuggeschwindigkeit betragsmäßig kleiner als die Grenzgeschwindigkeit ist, als Summe des Elektromotor-Anforderungsmoments und des Korrekturmoments berechnet. Falls die aktuelle Fahrzeuggeschwindigkeit betragsmäßig größer als die Grenzgeschwindigkeit ist, wird das Elektromotor-Anforderungsmoment nicht korrigiert und das Elektromotor-Sollmoment entspricht dem Elektromotor-Anforderungsmoment.

Das Elektromotor-Anforderungsmoment entspricht der aktuellen Anforderung eines Drehmoments üblicherweise durch einen Fahrer des Fahrzeugs. Die Anforderung geht bevorzugt auf eine Anforderung mittels eines Fahrpedals zurück und/oder kann durch eine vorgeschaltete Fahrzeugregelung, bevorzugt noch ohne Anti-Ruckel Korrektur, vorgegeben oder geändert sein.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäßen Verfahrens zur Dämpfung von Ruckeln im Antriebsstrang eines Fahrzeugs.
- Fig. 2: ist eine Darstellung des Ablaufschemas eines erfindungsgemäßen Verfahrens zur Dämpfung von Ruckeln im Antriebsstrang eines Fahrzeugs.
- Fig. 3: ist eine Darstellung eines Dreipunkt-Reglers zur Bestimmung des Korrekturfaktors y in einem erfindungsgemäßen Verfahren.
- Fig. 4: zeigt ein Kennfeld zur Bestimmung des AnforderungsKorrektur-Moments k, abhängig vom ElektromotorAnforderungsmoment MEm_soll, in einem erfindungsgemäßen Verfahren.

### Detaillierte Beschreibung der Erfindung

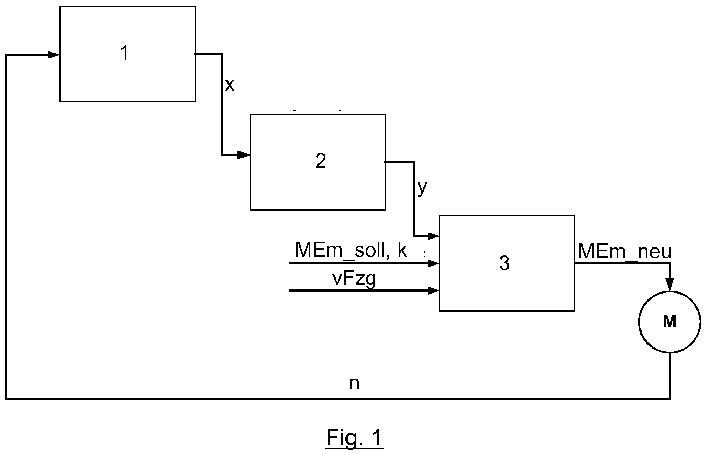

Die Fig. 1 stellt beispielhaft den schematischen Aufbau eines erfindungsgemäßen Anti-Ruckel Verfahrens dar. Das Verfahren gliedert sich in drei Teilfunktionen oder Module (Fig. 1), nämlich Signalfilterung 1, Signalanalyse 2 und Regelung 3.

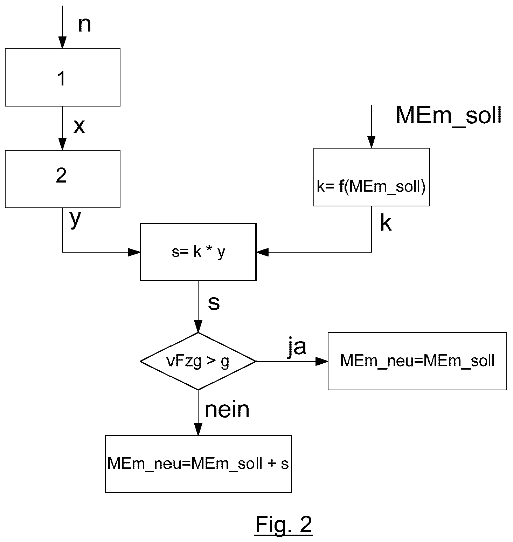

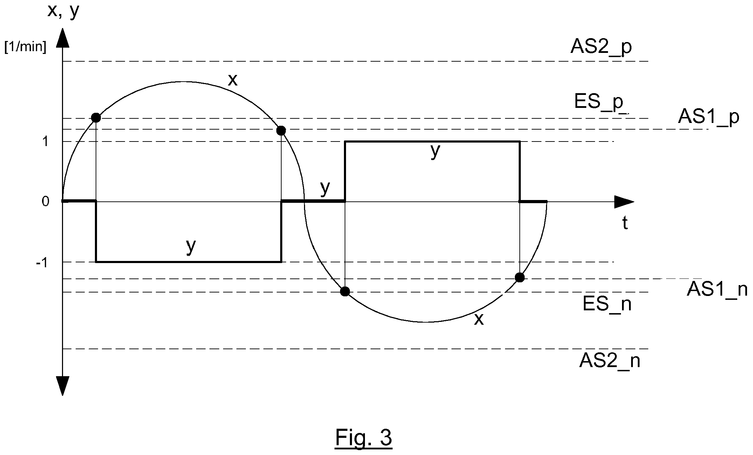

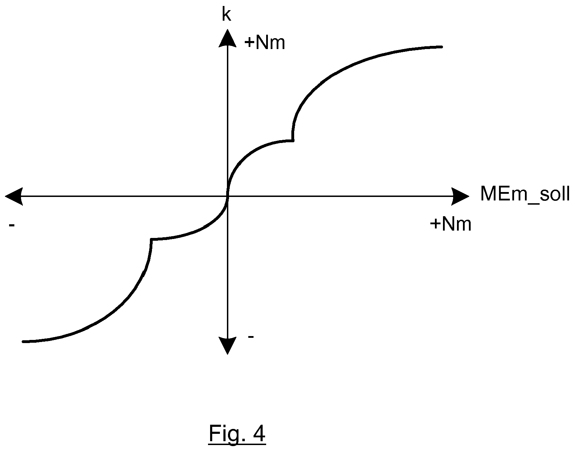

Ein Ablaufschema des selben Verfahrens ist in Fig. 2 dargestellt, wobei alle Bestandteile des Schemas, die nicht zur Signalfilterung 1 oder zur Signalanalyse 2 gehören, zur Regelung 3 zu rechnen sind. Einzelheiten des in Fig. 1 und Fig. 2 dargestellten Verfahrens sind in den Fig. 3 und Fig. 4 genauer dargestellt.

Zur Signalfilterung 1: Die Schwingung des Antriebstranges wird über die Elektromotor-Drehzahl n diagnostiziert und abhängig von diesem Wert geregelt. Zu diesem Zweck wird im erfindungsgemäßen Verfahren die Regelgröße Elektromotor-Drehzahl n vom Antriebs-Elektromotor M ausgelesen, und mittels eines Filtersystems bearbeitet. Dabei wird die Elektromotor-Drehzahl n zuerst mittels eines Bandpassfilters gefiltert. Bei der Auslegung des Filters handelt es sich um eine schmalbandige Filterung mit einer Mittenfrequenz im niedrigen Frequenzbereich, bei ca. 5 - 50Hz, zum Zweck der Freistellung des Drehzahl-Störsignals x. Dabei wird der Bandpass zum Beispiel durch eine Serienschaltung eines parametrisierbaren Tiefpasses und eines Hochpasses realisiert. Die Grenzfrequenzen werden so eingestellt, dass nur das fahrzeugspezifische Schwingen das Filter passieren kann. Dieses gefilterte Drehzahl-Störsignal x wird an die Signalanalyse 2, insbesondere ein Signalanalysemodul, übergeben.

Zur Signalanalyse 2: Dieses Modul wird durch einen Dreipunkt-Regler (siehe genauer in Fig. 3) mit Hysterese realisiert. Dieser Ansatz basiert auf der Tatsache, dass es sich beim dargestellten Antriebsstrangsystem um ein nichtlineares System handelt - welches sich auf die Problemstellung einer nichtlinearen Regelstrecke abbilden lässt. Dabei ist das Drehzahl-Störsignal x die Eingangsgröße des Reglers. Das Ausgangssignal, nämlich der Korrekturfaktor y des Reglers, kann je nach Verlauf und Amplitude des Drehzahl-Störsignals x drei verschiedene Zustände einnehmen (siehe Fig. 3). Diese sind:
a) Korrekturfaktor y = 0, wenn sich das Drehzahl-Störsignal x im Bereich des Nulldurchgangs befindet und keine der parametrisierbaren Einschaltschwellen (Einschaltschwelle positiv ES_p oder Einschaltschwelle negativ ES_n des Reglers) erreicht hat.
b) Korrekturfaktor y = -1, wenn das Drehzahl-Störsignal x die parametrisierbare Einschaltschwelle positiv ES_p überschritten hat und die erste Ausschaltschwelle positiv AS1_p nicht unterschritten hat (positive Schwingung) und die zweite Ausschaltschwelle positiv AS2_p nicht überschreitet. Die beiden Ausschaltschwellen AS1_p, AS2_p sind parametrisierbar. In Abhängigkeit der Amplitudenhöhe schaltet die erste Ausschaltschwelle positiv AS1_p, den Reglerausgang, nämlich Korrekturfaktor y = 0, wenn das Drehzahl-Störsignal x kleiner als der Parameterwert AS1_p wird. Die zweite Ausschaltschwelle positiv AS2_p setzt den Reglerausgang, nämlich Korrekturfaktor y wieder auf 0, wenn das Drehzahl-Störsignal x größer als der zugehörige Parameterwert AS2_p wird.
c) Korrekturfaktor y = 1, wenn das negative Drehzahl-Störsignal x betragsmäßig größer als die Einschaltschwelle negativ ES_n ist, und die erste Ausschaltschwelle negativ AS1_n betragsmäßig nicht unterschreitet und die zweite Ausschaltschwelle negativ AS2_n betragsmäßig nicht überschreitet.

Die beiden Ausschaltschwellen AS1_n, AS2_n sind wieder parametrisierbar. In Abhängigkeit der Amplitudenhöhe schaltet die erste Ausschaltschwelle negativ AS1_n den Reglerausgang, Korrekturfaktor y = 0, wenn das negative Drehzahl-Störsignal x betragsmäßig kleiner als der Parameterwert AS1_n wird. Die zweite Ausschaltschwelle negativ AS2_n setzt den Reglerausgang, Korrekturfaktor y wieder auf 0, wenn das Drehzahl-Störsignal x betragsmäßig größer als der zugehörige Parameterwert AS2_n wird.

Die Ausschaltschwellen für das positive als auch negative Störsignal AS1_p, AS2_p, AS1_n, AS2_n werden eingeführt um ein genaueres Abstimmen des Regleralgorithmus zu ermöglichen. Das Reglerausgangssignal y wird an das nachstehende Regelungs-Modul 3 (siehe Fig. 1) weiter geleitet.

Zur Regelung 3: Die Regelungsfunktion greift in die Momentenregelung des Umrichters des Elektromotors ein. Um dies zu ermöglichen, wird das Elektromotor-Anforderungsmoment MEm_soll, oder das daraus berechnete Anforderungs-Korrektur-Moment k, welches vom Fahrpedal des Kraftfahrzeuges (Fahrerwunsch) abgeleitet oder von anderen elektronischen Regelsystemen (Eingriff in Fahrerwunsch) im Fahrzeug berechnet und/oder vorgegeben wurde, als Eingangsgröße für dieses Teilmodul (Regelung 3) verwendet - siehe auch Fig. 2 und Fig. 4.

Das Anforderungs-Korrektur-Moment k kann in Abhängigkeit des aktuellen Elektromotor-Anforderungsmoments MEm_soll aus einer Tabelle (Look-up-table) ermittelt werden, die beispielsweise in der Regelfunktion bzw. dem Regler oder in einem anderen elektronischen Steuergerät abgelegt ist. Siehe beispielshaft das Kennfeld für das Anforderungs-Korrektur-Moment k, abhängig vom Elektromotor-Anforderungsmoment MEm_soll, in Fig. 4.

Anschließend wird das Anforderungs-Korrektur-Moment k mit dem Korrekturfaktor y aus der Signalanalyse 2 multipliziert. Das Korrekturmoment s = k * y (siehe Fig. 2). Das heißt, das Anforderungs-Korrektur-Moment k wird entweder mit Korrekturfaktor y = 1 oder y = -1 multipliziert, bzw. bei y = 0 gibt es kein Korrekturmoment, da dann s = 0.

Anschließend wird in Abhängigkeit der aktuellen Fahrzeuggeschwindigkeit vFzg entschieden, ob das Elektromotor-Anforderungsmoment MEm_soll mit dem Korrekturmoment s überlagert bzw. addiert wird. Als weiteres Eingangssignal wird daher die Fahrzeuggeschwindigkeit vFzg benötigt - sie dient der Aktivierung der gesamten Anti-Ruckel Funktion in einem bestimmten Geschwindigkeitsbereich. Die Aktivierung geschieht nur, wenn die Fahrzeuggeschwindigkeit vFzg betragsmäßig kleiner als die parametrisierte Grenzgeschwindigkeit g ist. Ansonsten ist das Elektromotor-Sollmoment MEm_neu gleich dem Elektromotor-Anforderungsmoment MEm_soll; es wird kein Korrekturmoment s dazu addiert.

Das so ermittelte Elektromotor-Sollmoment MEm_neu wird dann an den Elektromotor M oder die Momentenregelung des Elektromotors M des Antriebsstranges weitergegeben.

Je nach Konfiguration des Antriebstranges eines Fahrzeuges können Antriebsstrangs-Schwingungen bei Lastwechseln, wie zum Beispiel beim Anfahren, in unterschiedlichen Ausprägungen auftreten. Das erfindungsgemäße Verfahren hat den weiteren Vorteil, dass dieses durch einfache Parametrisierung auf sich ändernde Bedingungen und Antriebsstrangkonfigurationen anpassbar ist.

Die Abhängigkeit des erfindungsgemäßen Verfahrens von der Fahrzeuggeschwindigkeit sowie dem Elektromotor-Anforderungsmoment sind beispielsweise über die Grenzgeschwindigkeit g und das Kennfeld bzw. die Tabelle zur Bestimmung des Anforderungs-Korrektur-Moments k parametrisierbar. Somit ist auch eine Anpassung auf verschiedenste Fahrsituationen leicht möglich. Beispielsweise liefert beim Anfahren des Fahrzeuges auf einem Berg meistens ein größeres Anforderungs-Korrektur-Moment k bessere Ergebnisse.

Durch das erfindungsgemäße Verfahren ist es möglich Schwingungen eines Antriebsstranges, insbesondere Ruckeln im Antriebsstrang, aktiv zu dämpfen.

### Bezugszeichenliste

- M: Elektromotor
- MEm_neu: Elektromotor-Sollmoment
- MEm_soll: Elektromotor-Anforderungsmoment
- n: Elektromotor-Drehzahl
- x: Drehzahl-Störsignal
- y: Korrekturfaktor
- s: Korrekturmoment
- k: Anforderungs-Korrektur-Moment
- vFzg: Fahrzeuggeschwindigkeit
- g: Grenzgeschwindigkeit

- ES_p: Einschaltschwelle positiv
- ES_n: Einschaltschwelle negativ
- AS1_p: Erste Ausschaltschwelle positiv
- AS1_n: Erste Ausschaltschwelle negativ
- AS2_p: Zweite Ausschaltschwelle positiv
- AS2_n: Zweite Ausschaltschwelle negativ

## Patentansprüche

1. Verfahren zur Dämpfung von Ruckeln im Antriebsstrang eines Fahrzeugs mit einem Elektromotor (M) als Antriebsmotor, **dadurch gekennzeichnet, dass** ein Elektromotor-Sollmoment (MEm_neu) zur Ansteuerung des Elektromotors (M) berechnet wird aus einem Elektromotor-Anforderungsmoment (MEm_soll), das der aktuellen Anforderung eines Drehmoments entspricht, und einem Korrekturmoment (s), wobei das Korrekturmoment (s) abhängig vom Elektromotor-Anforderungsmoment (MEm_soll) und von einem Korrekturfaktor (y) berechnet wird, wobei der Korrekturfakor (y) aus der Elektromotor-Drehzahl (n) bestimmt wird.

2. Verfahren nach Anspruch 1,
**dadurch gekennzeichnet, dass** das Elektromotor-Sollmoment (MEm_neu), zumindest in einem bestimmten Bereich der Fahrzeuggeschwindigkeit (vFzg), als Summe des Elektromotor-Anforderungsmoments (MEm_soll) und des Korrekturmoments (s) gebildet wird.

3. Verfahren nach zumindest einem der vorhergehenden Ansprüche, **dadurch gekennzeichnet, dass** das Korrekturmoment (s) als Produkt eines aus dem Elektromotor-Anforderungsmoment (MEm_soll) gebildeten Anforderungs-Korrektur-Moments (k) und dem Korrekturfaktor (y) gebildet wird.

4. Verfahren nach zumindest einem der vorhergehenden Ansprüche, **dadurch gekennzeichnet, dass** das Anforderungs-Korrektur-Moment (k) mittels eines Kennfeldes, insbesondere mittels einer Wertetabelle, aus dem Elektromotor-Anforderungsmoment (MEm_soll) berechnet wird.

5. Verfahren nach zumindest einem der vorhergehenden Ansprüche, **dadurch gekennzeichnet, dass** der Korrekturfaktor (y) positiv und negativ sein kann, bevorzugt nur drei diskrete Werte aufweisen kann, insbesondere 0, -1 und + 1.

6. Verfahren nach zumindest einem der vorhergehenden Ansprüche, **dadurch gekennzeichnet, dass** der Korrekturfaktor (y) aus einem, aus der Elektromotor-Drehzahl (n) gebildeten, Drehzahl-Störsignal (x) mittels eines Dreipunkt-Reglers bestimmt wird.

7. Verfahren nach zumindest einem der vorhergehenden Ansprüche, **dadurch gekennzeichnet, dass** das Drehzahl-Störsignal (x) mittels Signalfilterung, insbesondere mittels eines Bandpassfilters, aus der Elektromotor-Drehzahl (n) gebildet wird.

8. Verfahren nach zumindest einem der vorhergehenden Ansprüche, **dadurch gekennzeichnet, dass** die aktuelle Fahrzeuggeschwindigkeit (vFzg) mit einer definierten Grenzgeschwindigkeit (g) verglichen wird und das Elektromotor-Sollmoment (MEm_neu) falls die aktuelle Fahrzeuggeschwindigkeit (vFzg) betragsmäßig kleiner als die Grenzgeschwindigkeit (g) ist, als Summe des Elektromotor-Anforderungsmoments (MEm_soll) und des Korrekturmoments (s) berechnet wird und falls die aktuelle Fahrzeuggeschwindigkeit (vFzg) betragsmäßig größer als die Grenzgeschwindigkeit (g) ist, durch des Elektromotor-Anforderungsmoment (MEm_soll) gegeben ist.

9. Verfahren nach zumindest einem der vorhergehenden Ansprüche, **dadurch gekennzeichnet, dass** das Elektromotor-Anforderungsmoment (MEm_soll) der aktuellen Anforderung eines Drehmoments durch einen Fahrer des Fahrzeugs entspricht, insbesondere durch Anforderung mittels eines Fahrpedals und/oder durch Anforderung mittels einer vorgeschalteten Fahrzeugregelung.

10. Fahrzeug umfassend einen Antriebsstrang mit einem Elektromotor (M) als Antriebsmotor und eine Regelung, wobei die Regelung zur Ausführung eines Verfahrens nach zumindest einem der Ansprüche 1 bis 9 ausgebildet ist.
